# EUROPEAN PATENT SPECIFICATION

(11) **EP 3 148 200 B1**
(45) Date of publication and mention of the grant of the patent: **17.06.2020**
(21) Application number: 15814601.9
(22) Date of filing: 16.06.2015
(51) Int. Cl.: H04N 21/262, H04N 21/2343, H04N 21/845, H04N 21/235, H04N 21/854, H04N 19/436, H04N 19/46

(54) **INFORMATION PROCESSING DEVICE AND METHOD SELECTING CONTENT FILES BASED ON ENCODING PARALLELISM TYPE**
INFORMATIONSVERARBEITUNGSVORRICHTUNG UND -VERFAHREN ZUR AUSWAHL VON INHALTSDATEIEN BASIEREND AUF DEM PARALLELISIERUNGSTYP DER KODIERUNG
DISPOSITIF ET PROCÉDÉ DE TRAITEMENT D'INFORMATION SÉLECTIONNANT DES FICHIERS DE CONTENU EN FONCTION DU TYPE DE PARALLÉLISME DE CODAGE

(30) Priority: 30.06.2014 JP 2014134877
(43) Date of publication of application: 29.03.2017
(73) Proprietor: Sony Corporation, Tokyo 108-0075 (JP)
(72) Inventor: HIRABAYASHI Mitsuhiro, Tokyo 108-0075 (JP); NAKAGAMI Ohji, Tokyo 108-0075 (JP)
(74) Representative: D Young & Co LLP
(86) International application number: PCT/JP2015/067233
(87) International publication number: WO 2016/002495

(56) References cited:
- WO-A1-2014/057131
- JP-A- 2011 087 103
- JP-A- 2011 160 077
- JP-A- 2011 504 337
- JP-A- 2012 186 763
- US-A1- 2014 086 333
- JONATAN SAMUELSSON ET AL: "HEVC file format parallelism indication", 102. MPEG MEETING; 15-10-2012 - 19-10-2012; SHANGHAI; (MOTION PICTURE EXPERT GROUP OR ISO/IEC JTC1/SC29/WG11),, no. m26877, 18 October 2012 (2012-10-18), XP030055210,
- THOMAS SCHIERL ET AL: "System Layer Integration of High Efficiency Video Coding", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 22, no. 12, 1 December 2012 (2012-12-01), pages 1871-1884, XP011487157, ISSN: 1051-8215, DOI: 10.1109/TCSVT.2012.2223054
- "Defect report on ISO/IEC 14496-15", 108. MPEG MEETING;31-3-2014 - 4-4-2014; VALENCIA; (MOTION PICTURE EXPERT GROUP OR ISO/IEC JTC1/SC29/WG11),, no. N14441, 11 April 2014 (2014-04-11), XP030021177,

## Description

### TECHNICAL FIELD

The present technology relates to an information processing device and a method, and more particularly, to an information processing device and a method that enable selection of a reproduction file suitable for the capacity on the reproduction side.

### BACKGROUND ART

As a content distribution technology using hypertext transfer protocol (HTTP), moving picture experts group - dynamic adaptive streaming over HTTP (MPEG-DASH) has been standardized recently (see Non-Patent Document 1, for example). According to MPEG-DASH, sets of encoded data representing the same content at different bit rates are stored into a content server. Clients select encoded data from among the sets of encoded data in accordance with network bandwidths, and reproduce the encoded data. This technology is called adaptive bitrate streaming (ABS).

Meanwhile, electronic devices that can be clients of such content distribution are becoming increasingly diverse, and, in this trend, the content reproduction performance of clients is also becoming diverse. Therefore, a content distribution technology like MPEG-DASH is also required to prepare more diverse files using more various values for more various parameters including not only resolutions and bandwidths but also encoding parameters such as parallelism types for encoding, and allow clients to select optimum files for their reproduction capacities.

### CITATION LIST

### NON-PATENT DOCUMENT

Non-Patent Document 1: MPEG-DASH (Dynamic Adaptive Streaming over HTTP) (URL: http://mpeg.chiariglione.org/standards/mpeg-dash/media-presentation-description-and-segment-formats/text-isoiec-23009-12012-dam-1)
US 2014/086333 A1 discloses the use of a property to indicate that all coded video sequences in a bitstream conform to a same profile.
Jonatan Samuelsson, Per Frojdh, "HEVC file format parallelism indication", ISO/IEC JTC1/SC29/WG11 MPEG2012/M26877, Shanghai, China, discloses a proposal to add parameters to an HEVC decoder configuration record representing a type of decoder parallelism supported by an elementary stream.
Schierl et al. "System Layer Integration of High Efficiency Video Coding", IEEE Transactions on circuits and systems for video technology, 22(12), December 2012, provides a system level overview of HEVC.
WO 2014/057131 discloses a method of streaming video data, the video data being divided into spatial tiles, creating a number of independent video sub-tracks.

### SUMMARY OF THE INVENTION

### PROBLEMS TO BE SOLVED BY THE INVENTION

However, the conventional MPEG-DASH standards do not include any function for notifying clients of more various parameters related to files.

The present technology has been suggested in view of those circumstances, and aims to enable selection of a reproduction file suitable for the capacity on the reproduction side.

### SOLUTIONS TO PROBLEMS

The invention is set out in the appended set of claims; the further examples called embodiments in the description are illustrative examples, not embodiments claimed in the present application.

### EFFECTS OF THE INVENTION

According to the present technology, information can be processed. Also, the present technology can enable selection of a reproduction file suitable for the capacity on the reproduction side.

### BRIEF DESCRIPTION OF DRAWINGS

Fig. 1 is a diagram for explaining the outline of MPEG-DASH.
Fig. 2 is a diagram showing an example configuration of an MPD.
Fig. 3 is a diagram for explaining temporal separation of content.
Fig. 4 is a diagram showing an example of a hierarchical structure under a period in an MPD.
Fig. 5 is a diagram for explaining an example configuration of an MPD file on a temporal axis.
Fig. 6 is a diagram showing a typical example configuration of an MPD.
Fig. 7 is a block diagram showing a typical example configuration of a file generation device.
Fig. 8 is a flowchart for explaining an example flow of a file generation process.
Fig. 9 is a flowchart for explaining an example flow of an MPD generation process.
Fig. 10 is a block diagram showing a typical example configuration of a file reproduction device.
Fig. 11 is a flowchart for explaining an example flow of a file reproduction process.
Fig. 12 is a diagram showing a typical example configuration of an MPD.
Fig. 13 is a chart showing an example of an HEVC Decoder Configuration Record.
Fig. 14 is a chart showing an example of semantics of a parallelism type.
Fig. 15 is a block diagram showing a typical example configuration of a distribution system.
Fig. 16 is a block diagram showing a typical example configuration of a computer.

### MODES FOR CARRYING OUT THE INVENTION

The following is a description of modes (hereinafter referred to as embodiments) for carrying out the present disclosure. It should be noted that explanation will be made in the following order.
1. First Embodiment (File Generation Device and File Reproduction Device)
2. Second Embodiment (Another Example Configuration of an MPD)
3. Third Embodiment (Distribution System)
4. Fourth Embodiment (Computer)

### <1. First Embodiment>

### <DASH>

Conventional content distribution technologies using hypertext transfer protocol (HTTP) include moving picture experts group - dynamic adaptive streaming over HTTP (MPEG-DASH), as disclosed in Non-Patent Document 1, for example. According to MPEG-DASH, sets of encoded data representing the same content at different bit rates are stored into a content server. Clients select encoded data from among the sets of encoded data in accordance with network bandwidths, and reproduce the encoded data. This technology is called adaptive bitrate streaming (ABS).

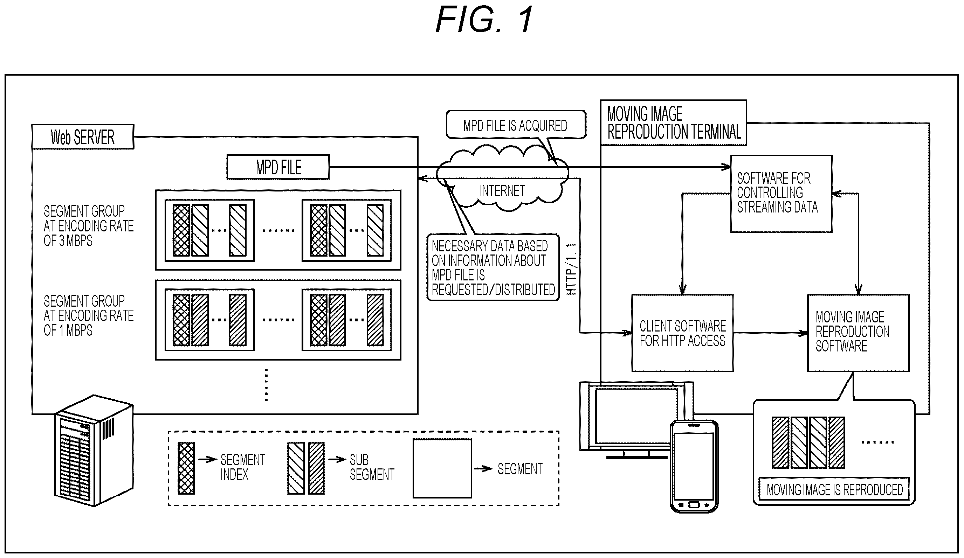

Referring now to Fig. 1, the procedures in content transmission according to DASH are described. First, in a moving image reproduction terminal on the content acquisition side, software for controlling streaming data selects a media presentation description (MPD) file of desired content, and acquires the file from a Web server. The MPD is the metadata for managing the content to be distributed, such as a moving image and sound.

After acquiring the MPD, the streaming data control software of the moving image reproduction terminal parses the MPD, and performs control so that data (a DASH segment) of the desired content suitable for the quality of the communication line and the performance of the moving image reproduction terminal will be acquired from a Web server. In accordance with the control, client software for HTTP access acquires the DASH segment from a Web server, using HTTP. Moving image reproduction software then reproduces the content acquired in the above manner.

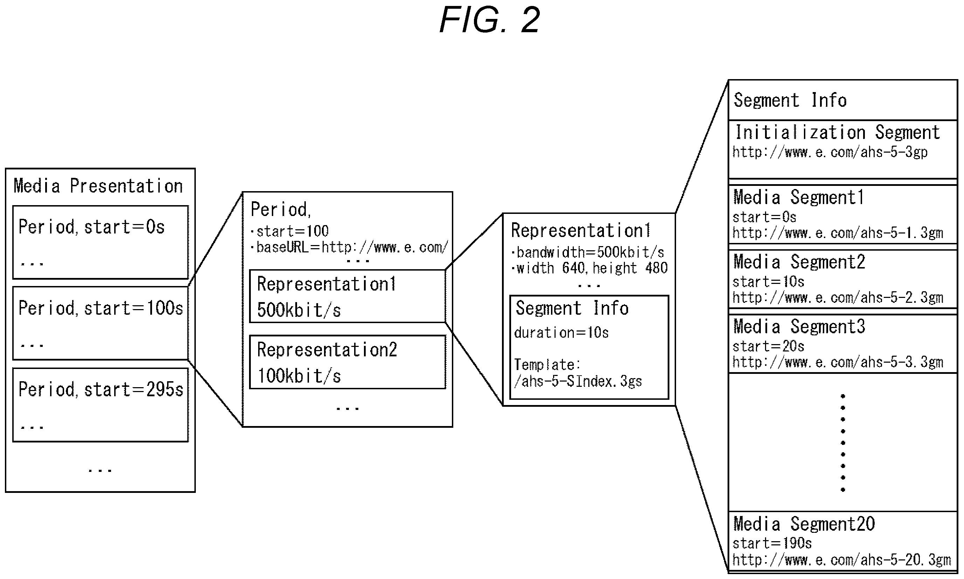

An MPD has the configuration shown in Fig. 2, for example. In parsing the MPD, a client selects the optimum one of the attributes of the representations included in a period in the MPD (Media Presentation shown in Fig. 2).

The client acquires the initialization segment by reading the top segment of the selected representation, and processes the initialization segment. The client then acquires ad reproduces the next segment.

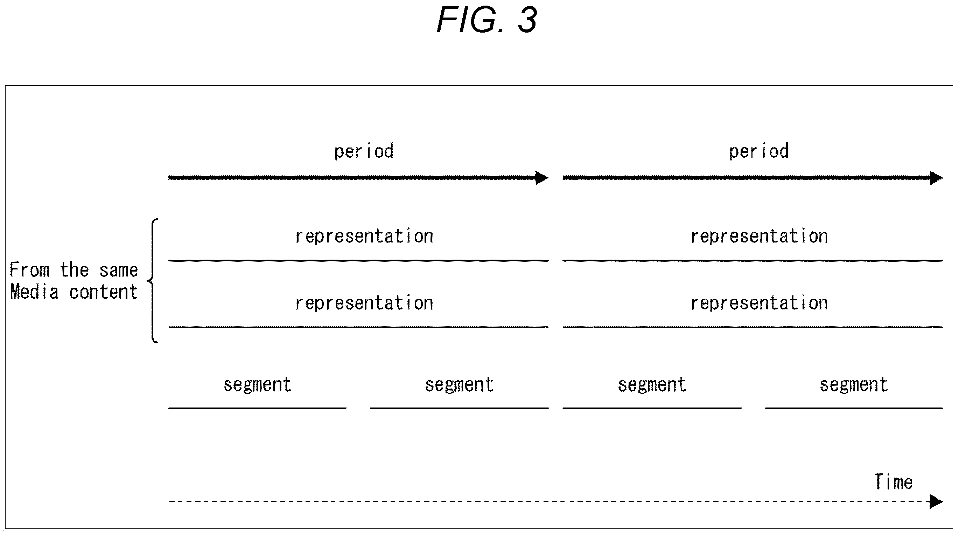

It should be noted that the relationship among periods, representations, and segments in the MPD is shown in Fig. 3, for example. Specifically, one set of media content can be managed in each period, which is a data unit in the temporal direction, and each period can be managed in each segment, which is a data unit in the temporal direction. Also, for each period, representations with different attributes such as different bit rates can be formed.

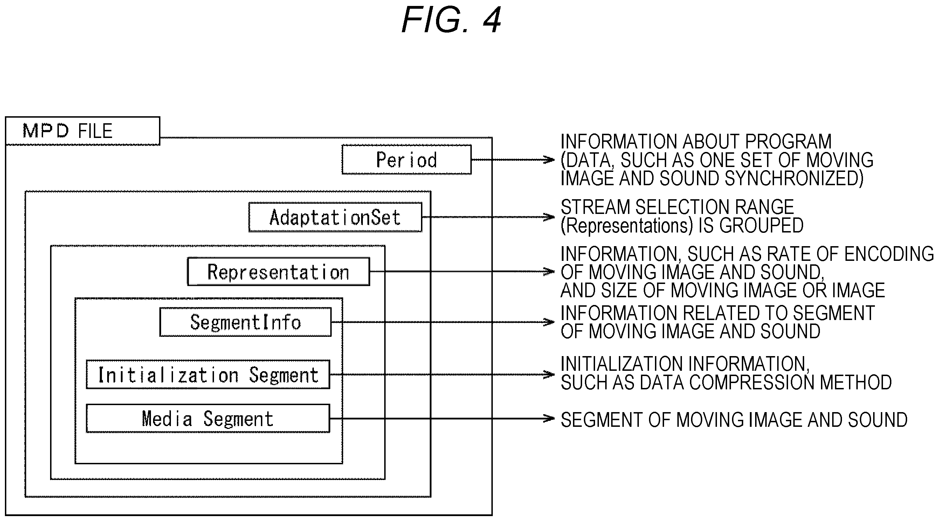

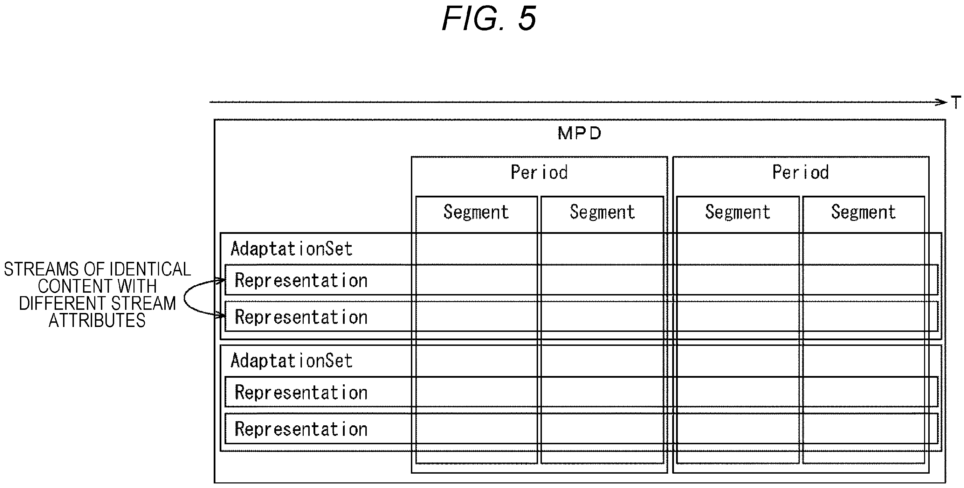

Therefore, the file of this MPD (also called the MPD file) has a hierarchical structure under a period, as shown in Fig. 4. Also, Fig. 5 shows an example of the structure of this MPD arranged on a temporal axis. As is apparent from the example shown in Fig. 5, representations exist for the same segment. A client adaptively selects one of these representations. By doing so, the client can acquire and reproduce appropriate stream data in accordance with the communication environment and the decoding capacity of the client.

However, the conventional MPEG-DASH standards do not include any function for notifying clients of more various parameters related to files. For example, an MPD compliant with the conventional MPEG-DASH standards does not include a mechanism for notifying the client side of information indicating a parallelism type at the time of encoding of image data to be distributed. Therefore, a client might select a file not suitable for its own performance. If there is mismatching between the performance of a client and the characteristics of the file to be reproduced as described above, the load of the reproduction process might unnecessarily increase on the client side, or the quality of the reproduced image might unnecessarily become lower.

To counter this, metadata that includes information about files containing encoded data generated by encoding image data, controls reproduction of the files is generated. This metadata also includes information about the encoding parameters of the respective files.

The information about the encoding parameters may include information indicating the parallelism type of the encoding of the image data.

Further, the information indicating the parallelism type may include identification information for determining whether the parallelism type is tile dividing and whether the parallelism type is wavefront parallel processing.

Also, the information about the encoding parameters may be set in representations in the MPD. Further, the information about the encoding parameters may be set as values of supplemental properties.

### <Example Configuration of an MPD>

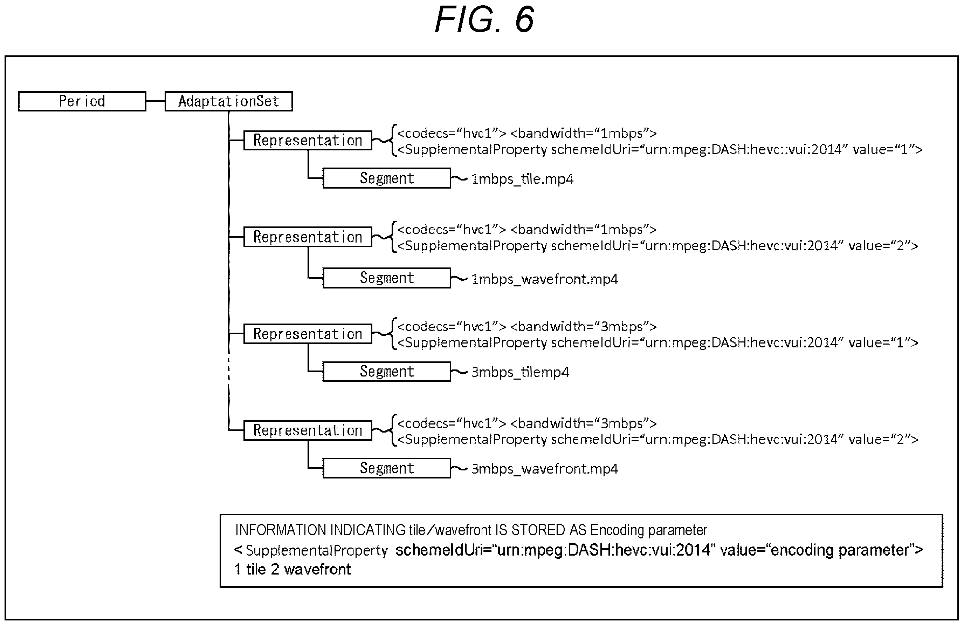

A more specific example is now described. Fig. 6 is a diagram showing a typical example configuration of an MPD generated according to the present technology. In this example case, two bandwidths of 1 mbps and 3 mbps are prepared, and two parallelism types, tile dividing (tile) and wavefront parallel processing (wavefront), are further prepared. That is, four files are prepared. "1mbps_tile.mp4" is an MP4 file storing encoded data that has a bandwidth of 1 mbps and indicates tile dividing as its parallelism type. "1mbps_wavefront.mp4" is an MP4 file storing encoded data that has a bandwidth of 1 mbps and indicates wavefront parallel processing as its parallelism type. "3mbps_tile.mp4" is an MP4 file storing encoded data that has a bandwidth of 3 mbps and indicates tile dividing as its parallelism type. "3mbps_wavefront.mp4" is an MP4 file storing encoded data that has a bandwidth of 3 mbps and indicates wavefront parallel processing as its parallelism type.

As shown in Fig. 6, in this MPD, an adaptation set is set under a period, four representations are set under the adaptation set, a segment is set under each representation, and "1mbps_tile.mp4", "1mbps_wavefront.mp4", "3mbps_tile.mp4", and "3mbps_wavefront.mp4" are set (registered) in different segments from one another.

Information (<codecs="hvc1">) indicating the encoding method used for the encoded data stored in the MP4 file is stored in each representation. "hvc1" is the identification information indicating that the encoding method is high efficiency video coding (HEVC). If the encoded data has been encoded by some other encoding method, this value is different. For example, in the case of scalable high efficiency video coding (SHVC), a value "lhv1" is stored.

Also, the bandwidth (<bandwidth="1mbps"> or <bandwidth="3mbps">) of the MP4 file is set in each representation.

Further, in each representation, supplemental properties are set, a scheme for tiling (schemeIdUri="urn:mpeg:DASH:hevc:vui:2014") is set as an element thereof, and identification information indicating the parallelism type of the MP4 file is set as the value thereof. In Fig. 6, a value "1" indicates that the parallelism type is tile dividing, and a value "2" indicates that the parallelism type is wavefront parallel processing.

For example, the information shown below is set.

<SupplementalProperty schemeIdUri="urm:mpeg:DASH:hevc:vui:2014" value="1"> or
<SupplementalProperty schemeIdUri="urm:mpeg:DASH:hevc:vui:2014" value="2">

By referring to the various kinds of information set in such representations, a client selects a file to be reproduced. As a client selects a representation, the MP4 file registered in the segment belonging to the representation is selected as the file to be reproduced, and is acquired.

As the various kinds of information are set in the representations as described above, the information can be presented to clients. Thus, a client can select a file more suitable for its own capacity, in accordance with the presented information. That is, selection of a reproduction file suitable for the capacity on the reproduction side can be enabled.

For example, in a case where the parallelism type is tile dividing, the file is suitable for decoding with a decoder of hardware. In a case where the parallelism type is wavefront parallel processing, the file is suitable for decoding with a decoder of software. Therefore, the file suitable for a client is determined by whether its own decoder is of hardware or by whether its own decoder is of software.

It should be noted that any appropriate information may be set in the representations. Information related to encoding such as the parallelism types shown in the example in Fig. 6, or information related to something other than encoding. For example, information related to the current image to be encoded may be set.

### <File Generation Device>

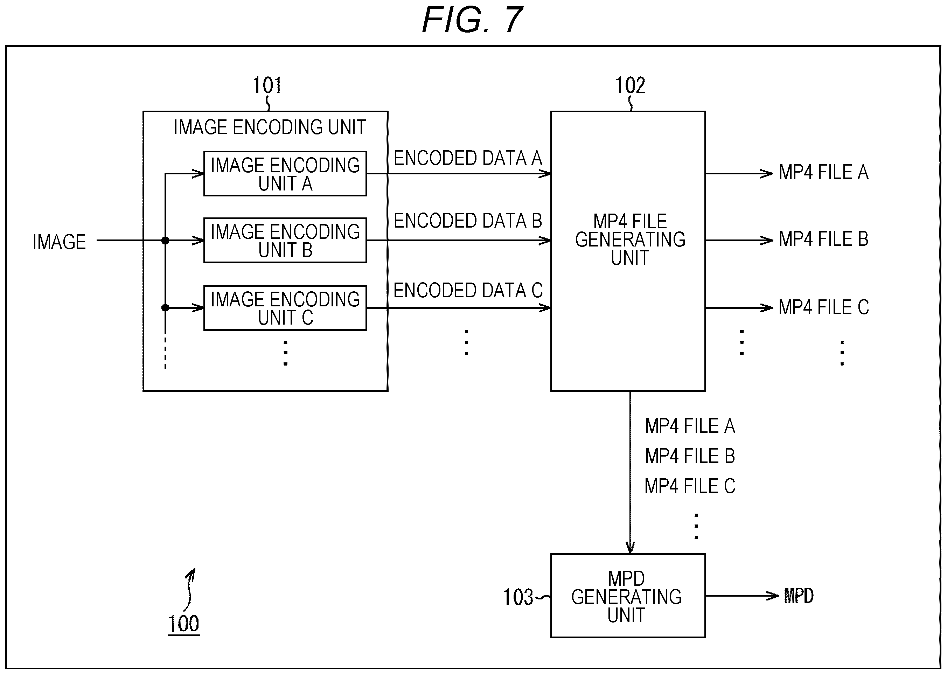

Next, a device that generates such files is described. Fig. 7 is a block diagram showing a typical example configuration of a file generation device as an embodiment of an information processing device to which the present technology is applied. In Fig. 7, a file generation device 100 includes encoding units (an image encoding unit A, an image encoding unit B, an image encoding unit C, ...) that perform encoding by different methods from one another. With these encoding units, an image is encoded by different methods, and sets of encoded data (encoded data A, encoded data B, encoded data C, ...) having image- or encoding-related parameters that partially differ from one another are generated. An image encoding unit 101 supplies the generated sets of encoded data to an MP4 file generating unit 102.

The MP4 file generating unit 102 turns the supplied sets of encoded data into MP4 files, and thus generates MP4 files storing different encoded data from one another. The MP4 file generating unit 102 outputs the generated MP4 files (an MP4 file A, an MP4 file B, an MP4 file C, ...). The MP4 file generating unit 102 also supplies the generated MP4 files (the MP4 file A, the MP4 file B, the MP4 file C, ...) to an MPD generating unit 103.

The MPD generating unit 103 generates an MPD to control the supplied MP4 files. In this MPD, information about image- or encoding-related parameters that are stored in the MP4 files and at least partially differ from one another is set. The MPD generating unit 103 outputs the MPD generated in this manner.

### <Flow of a File Generation Process>

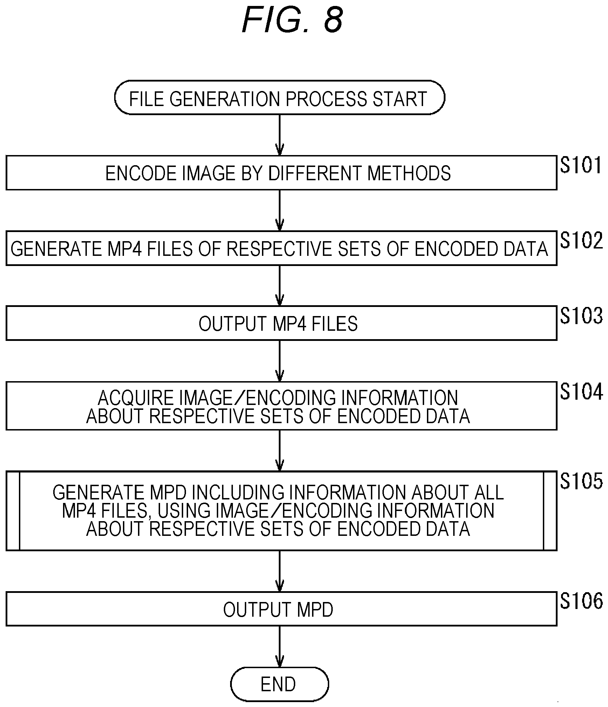

Referring now to the flowchart in Fig. 8, an example flow of a file generation process to be performed by the file generation device 100 shown in Fig. 7 is described.

When the file generation process is started, the image encoding unit 101 in step S101 encodes an image by different methods.

In step S102, the MP4 file generating unit 102 turns the sets of encoded data generated in step S101 into MP4 files.

As the MP4 files storing different encoded data from one another are generated, the MP4 file generating unit 102 outputs the generated MP4 files in step S103.

In step S104, from the respective MP4 files generated in step S102, the MPD generating unit 103 acquires the image/encoding information about the encoded data stored in the MP4 files.

In step S105, the MPD generating unit 103 generates an MPD that includes information about all the MP4 files, using the image/encoding information about the respective sets of encoded data.

In step S106, the MPD generating unit 103 outputs the MPD generated in step S105.

When the processing in step S106 is completed, the file generation process comes to an end.

### <Flow of an MPD Generation Process>

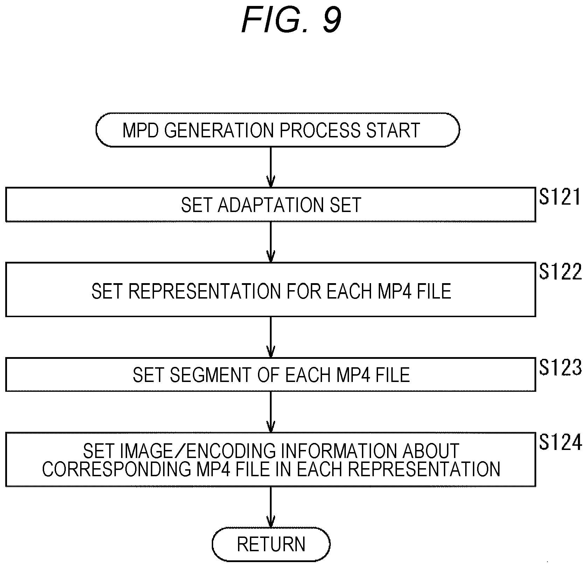

Referring now to the flowchart in Fig. 9, a specific example flow of an MPD generation process to be performed in step S105 in Fig. 8 is described.

When the MPD generation process is started, the MPD generating unit 103 in step S121 sets an adaptation set.

In step S122, the MPD generating unit 103 sets a representation for each MP4 file.

In step S123, the MPD generating unit 103 sets an MP4 file in each segment.

In step S124, the MPD generating unit 103 sets the image/encoding information about the corresponding MP4 file in each representation. In the example case shown in Fig. 6, for example, information (codecs) indicating the encoding method used for the encoded data stored in the MP4 file, the bandwidth of the MP4 file, and supplemental properties are set as the image/encoding information. Also, in the supplemental properties, a scheme for tiling (schemeIdUri="urn:mpeg:DASH:hevc:vui:2014") is set as an element thereof, and identification information indicating the parallelism type of the MP4 file is set as the value thereof. In Fig. 6, a value "1" indicates that the parallelism type is tile dividing, and a value "2" indicates that the parallelism type is wavefront parallel processing. The image/encoding information may of course include any appropriate information, and the image/encoding information may include information other than the above.

When the processing in step S124 is completed, the MPD generation process comes to an end, and the process returns to Fig. 8.

By performing the respective processes as described above, the file generation device 100 can set the image- or encoding-related parameters in representations, and present the information to the reproduction side. Thus, the file generation device 100 can enable the reproduction side to select a file more suitable for its own capacity in accordance with the presented information. That is, selection of a reproduction file suitable for the capacity on the reproduction side can be enabled.

### <File Reproduction Device>

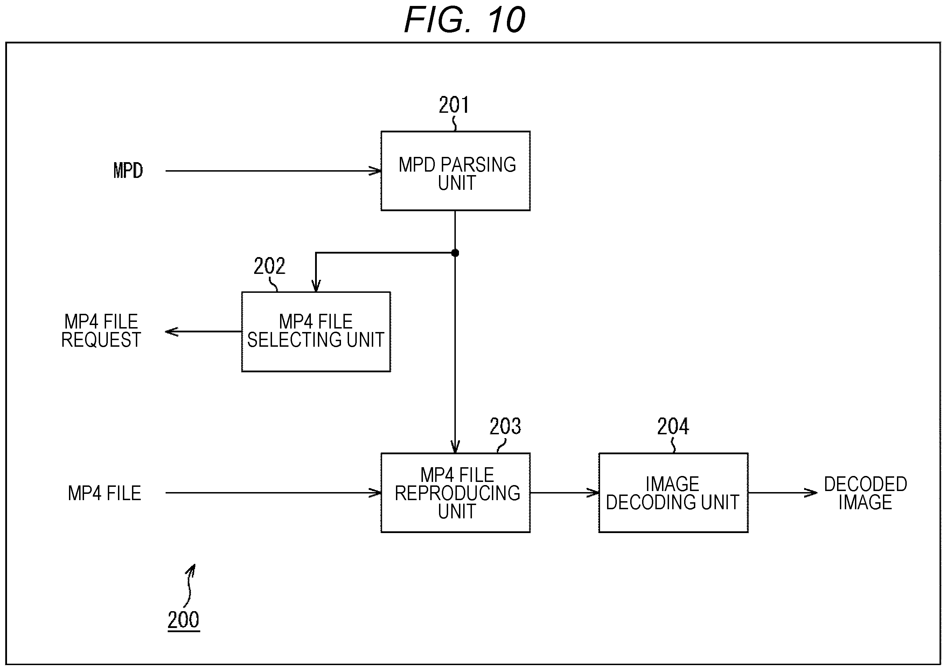

Next, a device that reproduces an MP4 file or an MPD generated by the file generation device 100 is described. Fig. 10 is a block diagram showing a typical example configuration of a file reproduction device as an embodiment of an information processing device to which the present technology is applied. In Fig. 10, a file reproduction device 200 is a device that generates a decoded image by reproducing an MP4 file or an MPD generated in the above manner by the file generation device 100 shown in Fig. 7, and outputs the decoded image.

As shown in Fig. 10, the file reproduction device 200 includes an MPD parsing unit 201, an MP4 file selecting unit 202, an MP4 file reproducing unit 203, and an image decoding unit 204.

### <Flow of a File Reproduction Process>

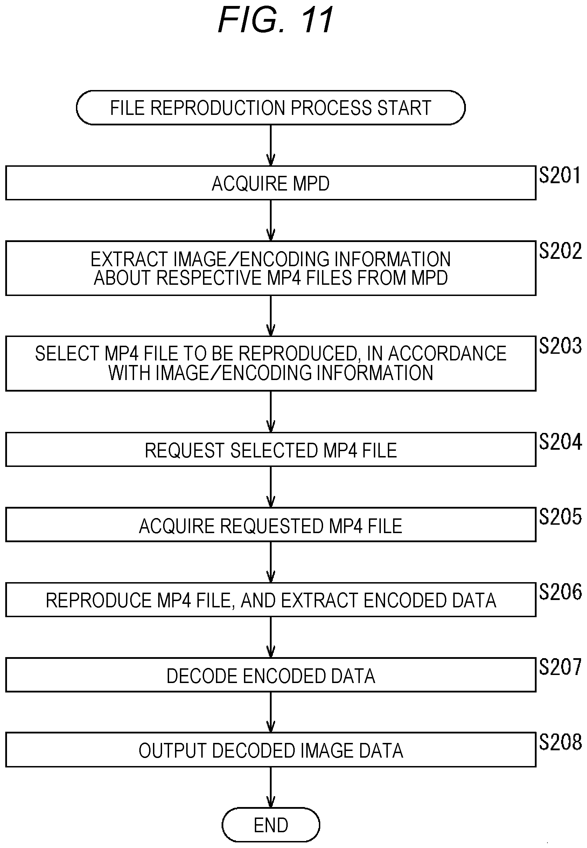

The file reproduction device 200 shown in Fig. 10 performs a file reproduction process, to parse an input MPD, select and acquire an MP4 file storing encoded data more suitable for its own capacity in accordance with information about the MPD, reproduce the MP4 file, and generate a decoded image. Referring now to the flowchart in Fig. 11, an example flow of this file reproduction process is described.

When the file reproduction process is started, the MPD parsing unit 201 acquires an MPD in step S201.

In step S202, from the MPD acquired in step S201, the MPD parsing unit 201 acquires the image/encoding information about each MP4 file, and supplies the information to the MP4 file selecting unit 202.

In step S203, in accordance with the supplied image/encoding information, the MP4 file selecting unit 202 selects an MP4 file more suitable for its own capacity as the MP4 file to be reproduced.

In step S204, the MP4 file selecting unit 202 requests the MP4 file selected through the processing in step S203, from the storage location thereof.

In step S205, the MP4 file reproducing unit 203 acquires the MP4 file supplied in response to the request issued in step S204.

In step S206, the MP4 file reproducing unit 203 reproduces the MP4 file acquired in step S205, extracts encoded data, and supplies the encoded data to the image decoding unit 204.

In step S207, the image decoding unit 204 decodes the encoded data supplied in step S206, and generates decoded image data.

In step S208, the image decoding unit 204 outputs the decoded image data generated in step S207.

As the decoded image data is output, the file reproduction process comes to an end.

By performing the file creation process as described above, the file reproduction device 200 can refer to the image- or encoding-related parameters set in the representations in the MPD, and recognize the characteristics of encoded data more easily. Thus, the file reproduction device 200 can select a file more suitable for its own capacity, in accordance with the presented information. That is, selection of a reproduction file suitable for the capacity on the reproduction side can be enabled.

### <2. Second Embodiment>

### <Example Configuration of an MPD>

The information indicating the parallelism type may include identification information for determining whether the parallelism type is slice dividing, whether the parallelism type is tile dividing, and whether the parallelism type is wavefront parallel processing.

Also, the information about encoding parameters may include information indicating the largest possible size of segmentation.

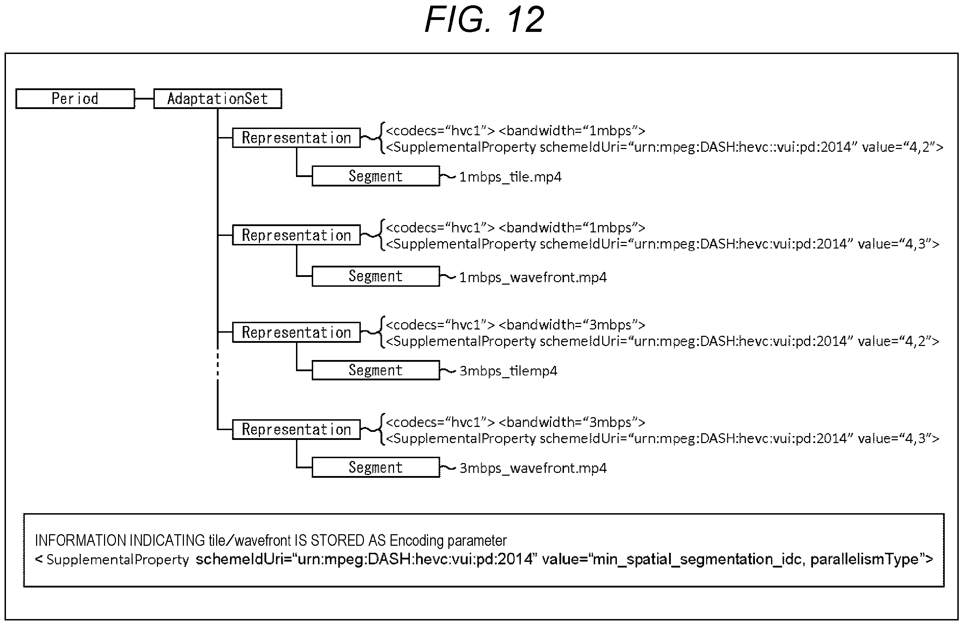

Fig. 12 is a diagram showing another example configuration of an MPD generated according to the present technology. The example configuration shown in Fig. 12 is basically similar to the example described above with reference to Fig. 6, except for the values of supplemental properties. For example, the supplemental properties are set as below.

<SupplementalProperty schemeIdUri="urm:mpeg:DASH:hevc:vui:pd:2014" value="4,2"> or
<SupplementalProperty schemeIdUri="urm:mpeg:DASH:hevc:vui:pd:2014" value="4,3">

In this case, information (min_spatial_segmentation_idc) indicating the largest possible size of segmentation, and identification information (parallelism Type) indicating the parallelism type of the MP4 file are set as the values.

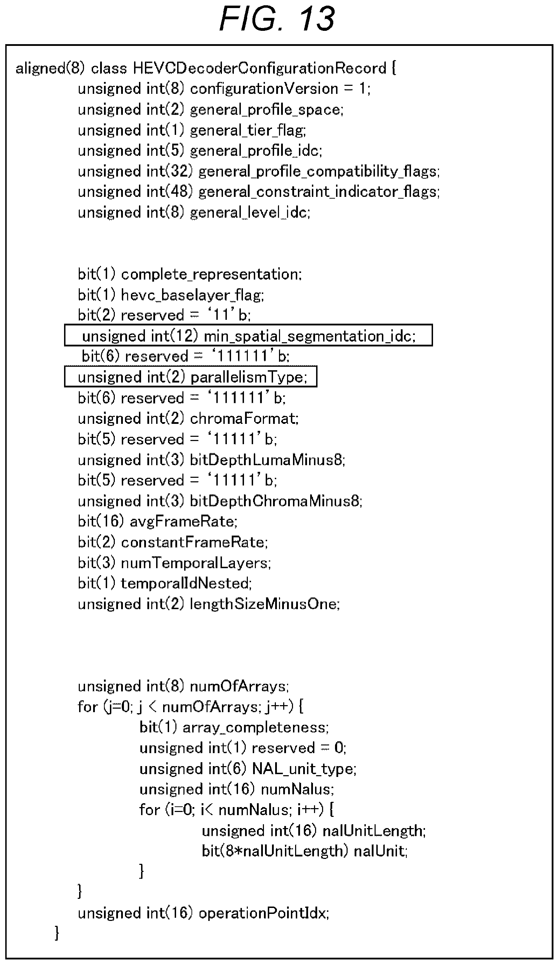

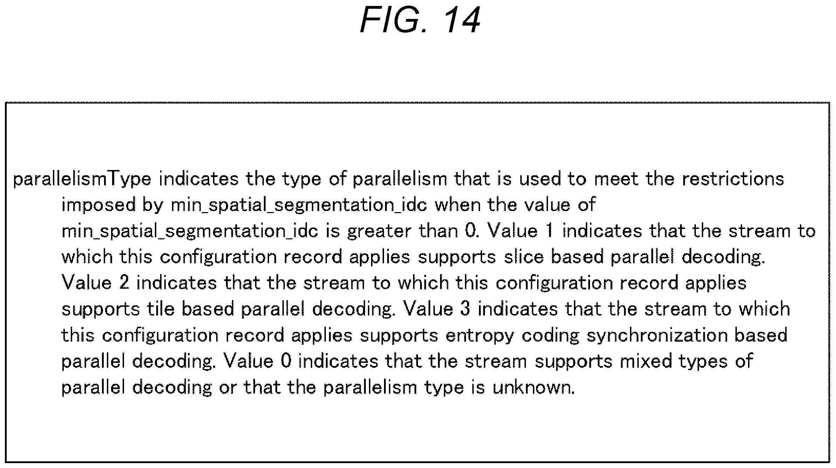

This "min_spatial_segmentation_idc" and "parallelism Type" are parameters defined in video usability information (VUI) about encoded data (HEVC), for example. Fig. 13 shows an example of the syntax of an HEVC Decoder Configuration Record generated according to VUI. As shown in Fig. 13, "min_spatial_segmentation_idc" and "parallelism Type" are set in the HEVC Decoder Configuration Record. Fig. 14 shows an example of the semantics of "parallelism Type". For example, in a case where the value of "parallelism Type" is "1", the parallelism type is slice dividing. In a case where the value of "parallelism Type" is "2", the parallelism type is tile dividing. In a case where the value of "parallelism Type" is "3", the parallelism type is wavefront parallel processing.

As described above, in this embodiment, the MPD generating unit 103 extracts image/encoding information included in encoded data, and sets various kinds of information in the representations in an MPD, without any change in the values. That is, the existing parameters are presented to the reproduction side. In this case, the MPD generating unit 103 does not need to newly define the parameters, and accordingly, can present the image/encoding information more easily to the reproduction side. Thus, a client can select a file more suitable for its own capacity, in accordance with the presented information. That is, selection of a reproduction file suitable for the capacity on the reproduction side can be enabled.

It should be noted that the processes such as a file generation process and a file reproduction process in this case are basically similar to the above described example, and therefore, explanation of them is repeated herein.

As described above, any appropriate information is set in the representations in an MPD. For example, the information may be alignment information (Pic_type/IRAP align) about the picture type between layers, information (Bit_rate/pic_rate) about the bit rate or the frame rate, image data information (video_signal) such as the primary color, transfer characteristics, and matrix coefficients, adaptive resolution control, information about various flags such as "higher_layer_irap_skip_flag" and "vert_pahse_position_in_use_flag", or HRD-related information about bistream partition or the like. It is of course possible to set information other than the above.

In the above described example case, the file reproduction device 200 enables selection of a reproduction file suitable for the capacity on the reproduction side from among MP4 files. However, the capacity on the reproduction side may be the capacity of processing required for generating decoded image data, or may be some other capacity. For example, the MP4 file selecting unit 202 may select an MP4 file more suitable for the performance (the resolution, the color gamut, the frame rate, and the like) of the display that is to display the decoded image to be obtained. Furthermore, if the MP4 file selecting unit 202 can recognize the performance of the display, this display may be a different device from the file reproduction device 200.

### <3. Third Embodiment>

### <Distribution System>

Each of the above described devices of the respective embodiments can be used in a distribution system that distributes still images and moving images, for example. In the description below, such a case will be explained.

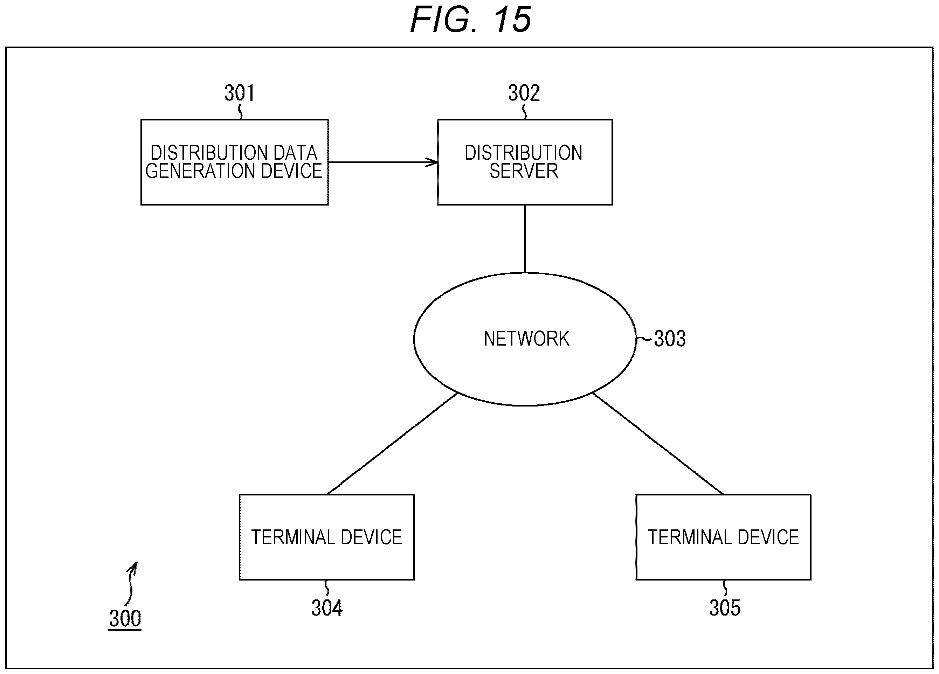

Fig. 15 is a diagram showing a typical example configuration of a distribution system to which the present technology is applied. The distribution system 300 shown in Fig. 15 is a system that distributes still images and moving images. As shown in Fig. 15, the distribution system 300 includes a distribution data generation device 301, a distribution server 302, a network 303, a terminal device 304, and a terminal device 305.

The distribution data generation device 301 generates distribution data in a distribution format, from the data of the still image or the moving image to be distributed. The distribution data generation device 301 supplies the generated distribution data to the distribution server 302. The distribution server 302 stores and manages the distribution data generated by the distribution data generation device 301 in a storage unit or the like, and provides a service of distribution of the distribution data to the terminal device 304 and the terminal device 305 via the network 303.

The network 303 is a communication network that serves as a communication medium. The network 303 may be any communication network, such as a cable communication network, a wireless communication network, or a cable/wireless communication network. For example, the network 303 may be a cable local area network (LAN), a wireless LAN, a public telephone network, a wide-area communication network for wireless mobile terminals, such as a so-called 3G network or a 4G network, the Internet, or a combination of some of these networks. Also, the network 303 may be a single communication network, or may be more than one communication network. Further, part of or all of the network 303 may be formed with communication cables compliant with predetermined standards, such as universal serial bus (USB) cables or high-definition multimedia interface (HDMI, a registered trade name) cables.

The distribution server 302, the terminal device 304, and the terminal device 305 are connected to the network 303, and can communicate with one another. These devices may be connected to the network 303 by any appropriate method. For example, these devices may be connected to the network 303 through cable communication, or may be connected to the network 303 through wireless communication. Also, these devices may be connected to the network 303 via any appropriate communication device (communication facility), such as an access point, a relay device, or a base station.

The terminal device 304 and the terminal device 305 are electronic devices each having a communication function, such as portable telephone devices, smartphones, tablet computers, or notebook computers. The terminal device 304 and the terminal device 305 request distribution of a distribution file from the distribution server 302, in accordance with an instruction from a user, for example.

The distribution server 302 transmits the requested distribution data to the requester. The terminal device 304 or the terminal device 305, whichever has requested the distribution, receives and reproduces the distribution data.

In the distribution system 300 designed as above, the present technology described above in the respective embodiments is applied to the distribution data generation device 301. That is, the above described file generation device 100 is used as the distribution data generation device 301.

The present technology described above in the respective embodiments is also applied to the terminal device 304 and the terminal device 305. That is, the above described file reproduction device 200 is used as the terminal device 304 and the terminal device 305.

In this manner, the distribution data generation device 301, the terminal device 304, and the terminal device 305 can achieve effects similar to those of the above described respective embodiments. That is, the distribution system 300 can enable selection of a reproduction file suitable for the capacity on the reproduction side.

### <4. Fourth Embodiment>

### <Computer>

The above described series of processes can be performed by hardware or can be performed by software. When the series of processes are to be conducted by software, the program that forms the software is installed into a computer. Here, the computer may be a computer incorporated into special-purpose hardware, or may be a general-purpose personal computer that can execute various kinds of functions when various kinds of programs are installed thereinto, for example.

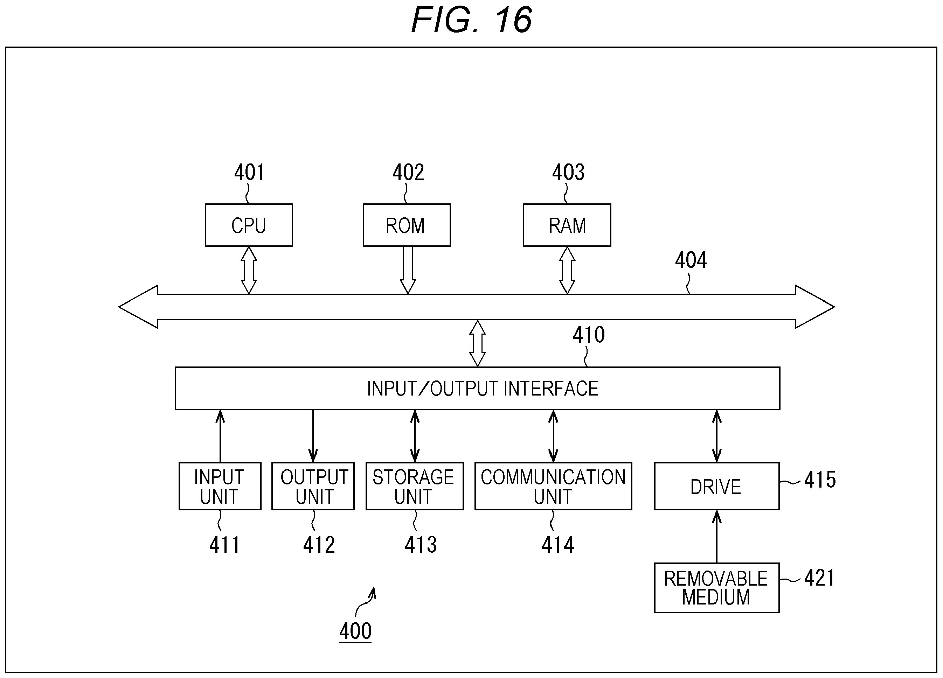

Fig. 16 is a block diagram showing an example configuration of the hardware of a computer that performs the above described series of processes in accordance with a program.

In the computer 400 shown in Fig. 16, a central processing unit (CPU) 401, a read only memory (ROM) 402, and a random access memory (RAM) 403 are connected to one another by a bus 404.

An input/output interface 410 is also connected to the bus 404. An input unit 411, an output unit 412, a storage unit 413, a communication unit 414, and a drive 415 are connected to the input/output interface 410.

The input unit 411 is formed with a keyboard, a mouse, a microphone, a touch panel, an input terminal, and the like. The output unit 412 is formed with a display, a speaker, an output terminal, and the like. The storage unit 413 is formed with a hard disk, a RAM disk, a nonvolatile memory, or the like. The communication unit 414 is formed with a network interface or the like. The drive 415 drives a removable medium 421 such as a magnetic disk, an optical disk, a magnetooptical disk, or a semiconductor memory.

In the computer having the above described configuration, the CPU 401 loads a program stored in the storage unit 413 into the RAM 403 via the input/output interface 410 and the bus 404, for example, and executes the program, so that the above described series of processes are performed. The RAM 403 also stores data necessary for the CPU 401 to perform various processes and the like as appropriate.

The program to be executed by the computer (the CPU 401) may be recorded on the removable medium 421 as a packaged medium, for example, and be then used. In that case, the program can be installed into the storage unit 413 via the input/output interface 410 when the removable medium 421 is mounted on the drive 415.

Alternatively, this program can be provided via a wired or wireless transmission medium such as a local area network, the Internet, or digital satellite broadcasting. In that case, the program may be received by the communication unit 414, and be installed into the storage unit 413.

Also, this program may be installed beforehand into the ROM 402 or the storage unit 413.

It should be noted that the program to be executed by the computer may be a program for performing processes in chronological order in accordance with the sequence described in this specification, or may be a program for performing processes in parallel or performing a process when necessary, such as when there is a call.

Also, in this specification, steps describing the program to be recorded on a recording medium include processes to be performed in parallel or independently of one another if not necessarily in chronological order, as well as processes to be performed in chronological order in accordance with the sequence described herein.

Also, the procedures in the respective steps described above may be carried out in each of the above described devices or any appropriate device other than the above described devices. In that case, the device that is to carry out the processes should have the above described functions (functional blocks and the like) necessary for carrying out the processes. Also, the information necessary for carrying out the processes should be transmitted to the device as appropriate.

It should be noted that, in this specification, a system means an assembly of components (devices, modules (parts), and the like), and not all the components need to be provided in the same housing. In view of this, devices that are housed in different housings and are connected to each other via a network form a system, and one device having modules housed in one housing is also a system.

Furthermore, any configuration described above as one device (or one processing unit) may be divided into two or more devices (or processing units). Conversely, any configuration described above as two or more devices (or processing units) may be combined into one device (or processing unit). Furthermore, it is of course possible to add components other than those described above to the configuration of any of the devices (or processing units). Furthermore, some components of a device (or processing unit) may be incorporated into the configuration of another device (or processing unit) as long as the configuration and the functions of the system as a whole are substantially the same.

While preferred embodiments of the present disclosure have been described above with reference to the accompanying drawings, the technical scope of the present disclosure is not limited to those examples.

For example, the present technology can be embodied in a cloud computing configuration in which one function is shared among devices via a network, and processing is performed by the devices cooperating with one another.

Also, the respective steps described with reference to the above described flowcharts can be carried out by one device or can be shared among devices.

Furthermore, in a case where more than one process is included in one step, the processes included in the step can be performed by one device or can be shared among devices.

The present technology is not limited to this, and can also be embodied as any configuration to be mounted on the above devices or devices in the systems, such as a processor serving as a system large scale integration (LSI) or the like, a module using processors or the like, a unit using modules or the like, and a set (or a configuration in a device) having other functions added to the unit.

### REFERENCE SIGNS LIST

- 100: File generation device
- 101: Image encoding unit
- 102: MP4 file generating unit
- 103: MPD generating unit
- 200: File reproduction device
- 201: MPD parsing unit
- 202: MP4 file selecting unit
- 203: MP4 file reproducing unit
- 300: Distribution system
- 301: Distribution data generation device
- 302: Distribution server
- 303: Network
- 304 and 305: Terminal device
- 400: Computer

## Claims

1. An information processing device (200) for processing a plurality of content files for enabling a selection of a content file suitable for a capacity of a reproduction side comprising:
a metadata parsing unit (201) configured to parse a metadata file, the metadata file including metadata about the plurality of content files containing encoded data generated by encoding image data representing the same content, the metadata for the selection of one of the content files from the plurality of content files by a receiver, the metadata including information about encoding parameters of the respective content files, the information about the encoding parameters including information indicating a parallelism type of the encoding of the image data and including identification information for determining whether the parallelism type is tile dividing and whether the parallelism type is wavefront parallel processing;
a content file selecting unit (202) configured
to select one of the content files to be reproduced, in accordance with a result of the parsing performed by the metadata parsing unit and based at least in part on the information indicating the parallelism type of the encoding of the image data, and
to request the selected content file from a storage location of the selected content file; and
a content file reproducing unit (203) configured
to acquire the selected content file supplied in response to the request, and
to reproduce the content file selected by the content file selecting unit, wherein
the metadata file is a moving picture experts group - dynamic adaptive streaming over hypertext transfer protocol, HTTP, MPEG-DASH, media presentation description, MPD, file and the information about the encoding parameters is set as a value of a supplemental property.

2. The information processing device according to claim 1, wherein the information about the encoding parameters includes information indicating the largest possible size of segmentation.

3. The information processing device according to claim 1, wherein the information about the encoding parameters is set in a representation.

4. The information proceeding device according to any preceding claim, further comprising
an image decoding unit (204) wherein
the content file selecting unit (202) is configured to select one of the content files to be reproduced in dependence on the indicated parallelism type of the content files and on whether the image decoding unit is a hardware decoder or a software decoder,
in a case where the image decoding unit is a hardware decoder, the parallelism type associated with the selected content file is indicated to be tile dividing, and
in a case where the image decoding unit is a software decoder, the parallelism type associated with the selected content file is wavefront parallel processing.

5. An information processing method for processing a plurality of content files for enabling a selection of a content file suitable for a capacity of a reproduction side comprising:
parsing a metadata file, the metadata file including information about the plurality of content files containing encoded data generated by encoding image data representing the same content, the metadata for the selection of one of the content files from the plurality of content files by a receiver, the metadata including information about encoding parameters of the respective content files, the information about the encoding parameters including information indicating a parallelism type of the encoding of the image data and including identification information for determining whether the parallelism type is tile dividing and whether the parallelism type is wavefront parallel processing;
selecting one of the content files to be reproduced, in accordance with a result of the parsing and based at least in part on the information indicating the parallelism type of the encoding of the image data;
requesting the selected content file from a storage location of the selected content file; acquiring the selected content file supplied in response to the request, and
reproducing the selected content file, wherein
the metadata file is a moving picture experts group - dynamic adaptive streaming over hypertext transfer protocol, HTTP, MPEG-DASH, media presentation description, MPD, file and the information about the encoding parameters is set as a value of a supplemental property.

## Patentansprüche

1. Datenverarbeitungsvorrichtung (200) zum Verarbeiten mehrerer Inhaltsdateien zum Ermöglichen einer Auswahl einer Inhaltsdatei, die für eine Kapazität einer Wiedergabeseite geeignet ist, die Folgendes umfasst:
eine Metadaten-Parsing-Einheit (201), die konfiguriert ist, eine Metadatendatei zu parsen, wobei die Metadatendatei Metadaten über die mehreren Inhaltsdateien enthält, die codierte Daten enthalten, die durch Codieren von Bilddaten, die denselben Inhalt repräsentierten, erzeugt werden, wobei die Metadaten für die Auswahl einer der Inhaltsdateien aus den mehreren Inhaltsdateien durch einen Empfänger dienen, wobei die Metadaten Informationen über Codierparameter der jeweiligen Inhaltsdateien enthalten, wobei die Informationen über die Codierparameter Informationen enthalten, die einen Parallelitätstyp des Codierens der Bilddaten angeben, und Identifikationsinformationen zum Bestimmen, ob der Parallelitätstyp eine Kachelaufteilung ist und ob der Parallelitätstyp eine Wellenfrontparallelverarbeitung ist, enthalten;
eine Inhaltsdateiauswahleinheit (202), die konfiguriert ist,
eine der wiederzugebenden Inhaltsdateien in Übereinstimmung mit einem Ergebnis des durch die Metadatenparsingeinheit ausgeführten Parsings und zumindest teilweise anhand der Informationen, die den Parallelitätstyp der Codierung der Bilddaten angeben, auszuwählen und
die ausgewählte Inhaltsdatei von einem Speicherort der ausgewählten Inhaltsdatei anzufordern; und
eine Inhaltsdateiwiedergabeeinheit (203), die konfiguriert ist,
die ausgewählte Inhaltsdatei, die als Reaktion auf die Anforderung geliefert wird, zu erfassen und
die durch die Inhaltsdateiauswahleinheit ausgewählte Inhaltsdatei wiederzugeben, wobei
die Metadatendatei eine "Moving Picture Experts Group dynamic adaptive Streaming over Hypertext Transfer Protocol Media Presentation Description"-Datei, HTTP-MPEG-DASH-MPD-Datei, ist und die Informationen über die Codierparameter als ein Wert einer zusätzlichen Eigenschaft eingestellt sind.

2. Datenverarbeitungsvorrichtung nach Anspruch 1, wobei die Informationen über die Codierparameter Informationen enthalten, die die größtmögliche Größe einer Segmentierung angeben.

3. Datenverarbeitungsvorrichtung nach Anspruch 1, wobei die Informationen über die Codierparameter in einer Repräsentation eingestellt sind.

4. Datenverarbeitungsvorrichtung nach einem vorhergehenden Anspruch, die ferner Folgendes umfasst:
eine Bilddecodiereinheit (204), wobei
die Inhaltsdateiauswahleinheit (202) konfiguriert ist, eine der wiederzugebenden Inhaltsdateien in Abhängigkeit von dem angegebenen Parallelitätstyp der Inhaltsdateien und davon, ob die Bilddecodiereinheit ein Hardware-Decodierer oder ein Software-Decodierer ist, auszuwählen,
wobei in einem Fall, in dem die Bilddecodiereinheit ein Hardware-Decodierer ist, der der ausgewählten Inhaltsdatei zugeordnete Parallelitätstyp als eine Ziegelaufteilung angegeben ist und
in einem Fall, in dem die Bilddecodiereinheit ein Software-Decodierer ist, der der ausgewählten Inhaltsdatei zugeordnete Parallelitätstyp eine Wellenfrontparallelverarbeitung ist.

5. Datenverarbeitungsverfahren zum Verarbeiten mehrerer Inhaltsdateien zum Ermöglichen einer Auswahl einer Inhaltsdatei, die für eine Kapazität einer Wiedergabeseite geeignet ist, das Folgendes umfasst:
Parsing einer Metadatendatei, wobei die Metadatendatei Informationen über die mehreren Inhaltsdateien enthält, die codierte Daten enthalten, die durch Codieren von Bilddaten, die denselben Inhalt repräsentierten, erhalten werden, wobei die Metadaten für die Auswahl einer der Inhaltsdateien aus den mehreren Inhaltsdateien durch einen Empfänger dienen, wobei die Metadaten Informationen über Codierparameter der jeweiligen Inhaltsdateien enthalten, wobei die Informationen über die Codierparameter Informationen enthalten, die einen Parallelitätstyp des Codierens der Bilddaten angeben, und Identifikationsinformationen zum Bestimmen, ob der Parallelitätstyp eine Ziegelaufteilung ist und ob der Parallelitätstyp eine Wellenfrontparallelverarbeitung ist, enthalten;
Auswählen einer der wiederzugebenden Inhaltsdateien in Übereinstimmung mit einem Ergebnis des Parsings und zumindest teilweise anhand der Informationen, die den Parallelitätstyp der Codierung der Bilddaten angeben;
Anfordern der ausgewählten Inhaltsdatei von einem Speicherort der ausgewählten Inhaltsdatei; Erfassen der ausgewählten Inhaltsdatei, die als Reaktion auf die Anforderung geliefert wird, und
Wiedergeben der ausgewählten Inhaltsdatei, wobei
die Metadatendatei eine "Moving Picture Experts Group dynamic adaptive Streaming over Hypertext Transfer Protocol Media Presentation Description"-Datei, HTTP-MPEG-DASH-MPD-Datei, ist und die Informationen über die Codierparameter als ein Wert einer zusätzlichen Eigenschaft eingestellt sind.

## Revendications

1. Dispositif de traitement d'informations (200) pour traiter une pluralité de fichiers de contenu pour permettre une sélection d'un fichier de contenu adapté à une capacité d'un côté de reproduction comprenant :
une unité d'analyse syntaxique de métadonnées (201) configuré pour analyser syntaxiquement un fichier de métadonnées, le fichier de métadonnées comportant des métadonnées relatives à la pluralité de fichiers de contenu contenant des données codées générées par le codage de données d'image représentant le même contenu, les métadonnées pour la sélection d'un des fichiers de contenu parmi la pluralité de fichiers de contenu par un récepteur, les métadonnées comportant des informations relatives à des paramètres de codage des fichiers de contenu respectifs, les informations relatives aux paramètres de codage comportant des informations indiquant un type de parallélisme du codage des données d'image et comportant des informations d'identification pour déterminer que le type de parallélisme est ou non un pavage et que le type de parallélisme est ou non un traitement en parallèle de fronts d'onde ;
une unité de sélection de fichier de contenu (202) configurée pour
sélectionner un des fichiers de contenu à reproduire, conformément à un résultat de l'analyse syntaxique réalisée par l'unité d'analyse syntaxique de métadonnées et basée au moins en partie sur les informations indiquant le type de parallélisme du codage des données d'image, et
demander le fichier de contenu sélectionné à partir d'un emplacement mémoire du fichier de contenu sélectionné ; et
une unité de reproduction de fichier de contenu (203) configurée pour
acquérir le fichier de contenu sélectionné fourni en réponse à la demande, et
reproduire le fichier de contenu sélectionné par l'unité de sélection de fichier de contenu, dans lequel
le fichier de métadonnées est un fichier de description de présentation multimédia, MPD, de diffusion en continu adaptative dynamique sur protocole de transfert hypertexte, HTTP, du Moving Picture Experts Group, soit MPEG-DSAH, et les informations relatives aux paramètres de codage sont établies en tant que valeur d'une propriété supplémentaire.

2. Dispositif de traitement d'informations selon la revendication 1, dans lequel les informations relatives aux paramètres de codage comportent des informations indiquant la plus grande taille possible de segmentation.

3. Dispositif de traitement d'informations selon la revendication 1, dans lequel les informations relatives aux paramètres de codage sont établies dans une représentation.

4. Dispositif de traitement d'informations selon n'importe quelles revendications précédentes, comprenant en outre
une unité de décodage d'image (204) dans laquelle
l'unité de sélection de fichier de contenu (202) est configurée pour sélectionner un des fichiers de contenu à reproduire en fonction du type de parallélisme indiqué des fichiers de contenu et selon que l'unité de décodage d'image est un décodeur matériel ou un décodeur logiciel,
lorsque l'unité de décodage d'image est un décodeur matériel, le type de parallélisme associé au fichier de contenu sélectionné est indiqué comme un pavage, et
lorsque l'unité de décodage d'image est un décodeur logiciel, le type de parallélisme associé au fichier de contenu sélectionné est un traitement en parallèle de fronts d'onde.

5. Procédé de traitement d'informations pour traiter une pluralité de fichiers de contenu afin de permettre une sélection d'un fichier de contenu adapté à une capacité d'un côté de reproduction comprenant :
l'analyse syntaxique d'un fichier de métadonnées, le fichier de métadonnées comportant des informations relatives à la pluralité de fichiers de contenu contenant des données codées générées par le codage de données d'image représentant le même contenu, les métadonnées pour la sélection d'un des fichiers de contenu parmi la pluralité de fichiers de contenu par un récepteur, les métadonnées comportant des informations relatives à des paramètres de codage des fichiers de contenu respectifs, les informations relatives aux paramètres de codage comportant des informations indiquant un type de parallélisme du codage des données d'image et comportant des informations d'identification pour déterminer que le type de parallélisme est ou non un pavage et que le type de parallélisme est ou non un traitement en parallèle de fronts d'onde ;
la sélection d'un des fichiers de contenu à reproduire, conformément à un résultat de l'analyse syntaxique et basée au moins en partie sur les informations indiquant le type de parallélisme du codage des données d'image, et
la demande du fichier de contenu sélectionné à partir d'un emplacement mémoire du fichier de contenu sélectionné ; l'acquisition du fichier de contenu sélectionné fourni en réponse à la demande, et
la reproduction du fichier de contenu sélectionné, dans lequel
le fichier de métadonnées est un fichier de description de présentation multimédia, MPD, de diffusion en continu adaptative dynamique sur protocole de transfert hypertexte, HTTP, du Moving Picture Experts Group, soit MPEG-DSAH, et les informations relatives aux paramètres de codage sont établies en tant que valeur d'une propriété supplémentaire.
